Europäisches Patentamt

European Patent Office

Office européen des brevets

(19)

(11) **EP 1 144 831 B1**

(12) **EUROPÄISCHE PATENTSCHRIFT**

(45) Veröffentlichungstag und Bekanntmachung des Hinweises auf die Patenterteilung:
**06.05.2004   Patentblatt 2004/19**

(51) Int Cl.⁷: **F02D 41/22**, F02D 41/18, F02D 13/02

(21) Anmeldenummer: **00979434.8**

(22) Anmeldetag: **19.10.2000**

(86) Internationale Anmeldenummer:
**PCT/DE2000/003674**

(87) Internationale Veröffentlichungsnummer:
**WO 2001/036800 (25.05.2001 Gazette 2001/21)**

(54) **VERFAHREN ZUR PLAUSIBILITÄTSPRÜFUNG DER GEMESSENEN LAST BEI EINER BRENNKRAFTMASCHINE MIT VARIABLER VENTILHUBSTEUERUNG**

METHOD FOR THE PLAUSIBILITY CHECK OF THE MEASURED CHARGE IN AN INTERNAL COMBUSTION ENGINE WITH VARIABLE VALVE LIFT CONTROL

PROCEDE POUR VERIFIER LA PLAUSIBILITE DE LA CHARGE MESUREE DANS UN MOTEUR A COMBUSTION INTERNE A COMMANDE VARIABLE DE LEVEE DES SOUPAPES

(84) Benannte Vertragsstaaten:
**DE FR IT**

(30) Priorität: **12.11.1999  DE 19954535**

(43) Veröffentlichungstag der Anmeldung:
**17.10.2001   Patentblatt 2001/42**

(73) Patentinhaber: **ROBERT BOSCH GMBH**
**70442 Stuttgart (DE)**

(72) Erfinder:
- **WILD, Ernst**
  **71739 Oberriexingen (DE)**
- **BAUER, Torsten**
  **71665 Vaihingen (DE)**
- **KELLER, Stefan**
  **71735 Eberdingen (DE)**

(56) Entgegenhaltungen:
DE-A- 4 315 228          DE-A- 4 325 902
DE-A- 19 750 191        DE-C- 19 705 766
US-A- 5 125 384         US-A- 5 590 632

EP 1 144 831 B1

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft ein Verfahren zur Plausibilitätsprüfung der gemessenen Last bei einer Brennkraftmaschine mit variabler Ventilhubsteuerung. Eine solche Plausibilitätsprüfung der gemessenen Last ist beispielsweise bei einer Momentenüberwachung zweckmäßig, bei der ein zulässiges Moment des Motors, das sich im wesentlichen aus der Motordrehzahl und der Fahrpedalstellung ergibt, mit einem aus motorischen Größen berechneten Ist-Moment verglichen wird. Zu diesen motorischen Größen gehören in der Regel der Zündwinkel, die Motordrehzahl und die Last des Motors. Damit die Momentenüberwachung nicht durch eine ständig zu kleine Lastinformation in ihrer Wirksamkeit eingeschränkt wird, sollte das gemessene Lastsignal insbesondere hinsichtlich eines zu kleinen Wertes plausibilisiert werden. Aus dem EP 0 778 406 A2 ist es für eine konventionelle Brennkraftmaschine ohne variable Ventilsteuerung bekannt, eine aus der Drosselklappenstellung und der Motordrehzahl gewonnene Lastinformation mit der gemessenen Last zu vergleichen. Falls die gemessene Last von der aus der Drosselklappenstellung und der Motordrehzahl abgeleiteten Lastinformation um ein gewisses Maß abweicht, wird von einer fehlerhaften Lastmessung ausgegangen und dementsprechend eine Fehlerreaktion eingeleitet.

Der Erfindung liegt nun die Aufgabe zugrunde, ein Verfahren der eingangs genannten Art anzugeben, mit dem auch bei einer Brennkraftmaschine mit variabler Ventilhubsteuerung eine gemessene Last auf Plausibilität überprüft werden kann.

Vorteile der Erfindung

Die genannte Aufgabe wird mit den Merkmalen des Anspruchs 1 dadurch gelöst, daß zum einen in Abhängigkeit von der Drosselklappenstellung und einem aus dem Druck vor der Drosselklappe und dem Druck nach der Drosselklappe im Saugrohr ermittelten Differenzdruck eine erste Lastinformation hergeleitet wird. Zum anderen wird in Abhängigkeit vom Einlaßventilhub und von der Motordrehzahl eine zweite Lastinformation hergeleitet. Die kleinere der beiden Lastinformationen wird schließlich mit der gemessenen Last verglichen und es wird ein Fehler der gemessenen Last signalisiert, wenn diese gegenüber der mit ihr verglichenen Lastinformation abweicht. Mit diesem erfindungsgemäßen Verfahren wird berücksichtigt, daß zusätzlich zur Drosselklappe auch die Ventilhubsteuerung eine Drosselung bewirkt.

Zweckmäßige Weiterbildungen der Erfindung gehen aus den Unteransprüchen hervor.

Für den Fall, daß der ermittelte Differenzdruck oder der Einlaßventilhub fehlerhaft ist und somit keine Drosselung über die Ventile möglich ist, ist es vorteilhaft, in Abhängigkeit von der Drosselklappenstellung und der Motordrehzahl eine dritte Lastinformation herzuleiten und dann zur Plausibilitätsüberprüfung der gemessenen Last ein Vergleich mit der dritten Lastinformation durchzuführen.

Für eine sehr zuverlässige Plausibilitätsprüfung der gemessenen Last ist es zweckmäßig, auch den ermittelten Differenzdruck und den Einlaßventilhub auf Plausibilität zu überprüfen. Die Plausibilitätsprüfung des Differenzdrucks wird so durchgeführt, daß in Abhängigkeit von der Drosselklappenstellung und der Motordrehzahl eine Differenzdruckinformation abgeleitet wird, die mit dem ermittelten Differenzdruck verglichen wird, und daß ein Fehler des Differenzdrucks signalisiert wird, wenn dieser geringer ist als die Differenzdruckinformation. Die Plausibilitätsprüfung des Einlaßventilhubes kann so durchgeführt werden, daß die zweite aus dem Einlaßventilhub und der Motordrehzahl abgeleitete Lastinformation mit der gemessenen Last oder einer aus der Drosselklappenstellung und dem Saugrohrdifferenzdruck abgeleitete Last verglichen wird, und daß ein Fehler des Einlaßventilhubes signalisiert wird, wenn die zweite Lastinformation kleiner ist als die gemessene oder eine aus der Drosselklappenstellung und dem Saugrohrdifferenzdruck abgeleitete Last.

Die erste Lastinformation wird zweckmäßigerweise dadurch gewonnen, daß in Abhängigkeit von der Drosselklappenstellung und dem Differenzdruck aus einem Kennfeld der Luftmassenstrom zur Drosselklappe herausgelesen wird und daß dieser Luftmassenstrom durch die Motordrehzahl, welche mit einem von der Zylinderzahl und dem Hubvolumen abhängigen motorspezifischen Faktor multipliziert wird, dividiert wird.

Die zweite Lastinformation wird zweckmäßigerweise dadurch gewonnen, daß in Abhängigkeit vom Einlaßventilhub und der Motordrehzahl aus einem Kennfeld der Luftmassenstrom durch das (die) Einlaßventil(e) herausgelesen wird und daß dieser Luftmassenstrom durch die Motordrehzahl, welche mit einem von der Zylinderzahl und dem Hubvolumen abhängigen motorspezifischen Faktor multipliziert wird, dividiert wird.

Zeichnung

Die Erfindung wird anhand von in der Zeichnung dargestellten Ausführungsbeispielen näher erläutert. Es zeigen:

Figur 1 eine Systemdarstellung der Drücke und Luftmassenströme,
Figur 2 ein Funktionsdiagramm zur Plausibilitätsüberprüfung der gemessenen Last,
Figur 3 ein Funktionsdiagramm zur Plausibilitätsüberprüfung des gemessenen Differenzdrucks und
Figur 4 ein Funktionsdiagramm zur Plausibilitätsprüfung des Einlaßventilhubes.

Beschreibung von Ausführungsbeispielen

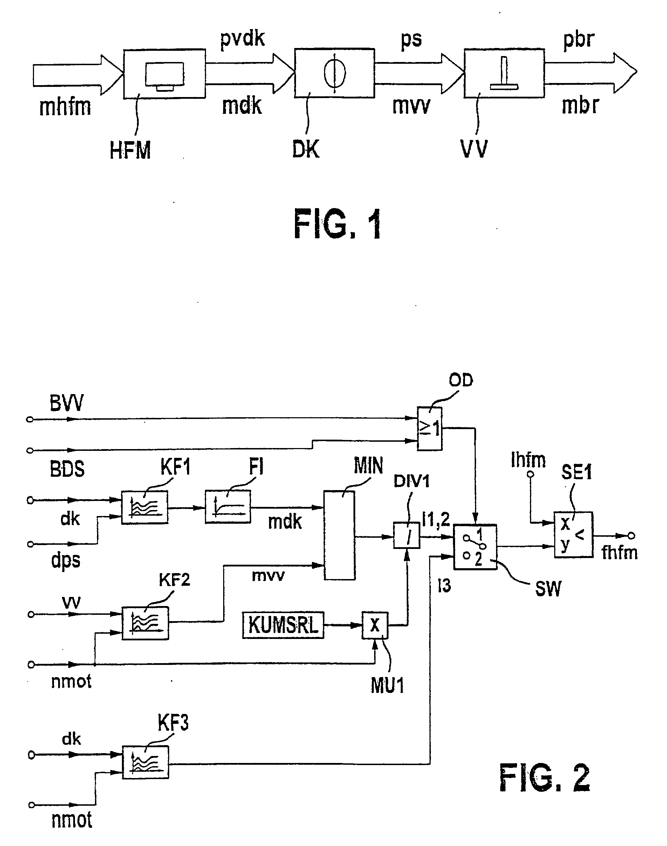

Die Figur 1 zeigt eine systematische Darstellung der Drücke und Luftmassenströme im Saugrohr einer Brennkraftmaschine, in dem sich ein Luftmassenmesser (vorzugsweise ein Heißfilm-Luftmassenmesser) HFM zur Lasterfassung, eine Drosselklappe DK und mindestens ein Einlaßventil VV, dessen Hub variabel steuerbar ist, befinden. Der Luftmassenstrom vor dem Luftmassenmesser HFM ist mit mhfm, der Luftmassenstrom vor der Drosselklappe DK mit mdk, der Luftmassenstrom durch das mindestens eine Einlaßventil W mit mvv und der Massenstrom zum Brennraum des Motors mit mbr bezeichnet. Mit pvdk ist der Druck vor der Drosselklappe DK, mit ps der Saugrohrdruck nach der Drosselklappe DK und mit pbr der Brennraumdruck bezeichnet. Zu dieser systematischen Darstellung der Drücke und Luftmassenströme lassen sich folgende Beziehungen aufstellen:
Generell gilt, wie in der Gleichung (1) dargestellt, daß stationär die Luftmassenströme über den Luftmassenmesser HFM, die Drosselklappe DK sowie über das mindestens eine Einlaßventile VV gleichgroß sind.

$$mhfm = mdk = mvv = mbr \qquad (1)$$

Die Gleichung (2) beschreibt den Luftmassenstrom mdk über die Drosselklappe DK. Dieser Luftmassenstrom mdk ergibt sich aus einem Norm-Luftmassenstrom mdkn in Abhängigkeit von der Drosselklappenstellung dk multipliziert mit einem Druckkorrekturfaktor, einem Temperaturkorrekturfaktor sowie einem Faktor aus einer Drosseklappendurchflußkennlinie KLAFDK.

$$mdk = mdkn(dk) \cdot \frac{pvdk}{p0} \cdot \sqrt{\frac{T0}{Tvdk}} \cdot KLAFDK\left(\frac{ps}{pvdk}\right) \qquad (2)$$

Der Norm-Luftmassenstrom mdkn ist der Luftmassenstrom über die Drosselklappe bei einer definierten Drosselklappenstellung einer definierten Temperatur T0 und einem definierten Druck p0 vor der Drosselklappe. Der Druckkorrekturfaktor ist das Verhältnis aus dem Druck pvdk vor der Drosselklappe DK und dem Druck p0. Der Temperaturkorrekturfaktor ist die Wurzel aus dem Verhältnis der Temperatur T0 und der Temperatur Tvdk vor der Drosselklappe. Der Faktor KLAFDK entstammt einer Drosselklappendurchflußkennlinie in Abhängigkeit von dem Verhältnis des Saugrohrdrucks ps nach der Drosselklappe und dem Druck pvdk vor der Drosselklappe.
Unter Venachlässigung des Drucks pvdk vor der Drosselklappe kann der Luftmassenstrom mdk über die Drosselklappe auch als Funktion der Droselklappenstellung und des Saugrohrdifferenzdrucks beschrieben werden.
Der Luftmassenstrom über die Einlaßventile ist in der Gleichung (3) wiedergegeben.

$$mvv = mvvn(vv) \cdot \frac{ps}{p0} \cdot \sqrt{\frac{T0}{Ts}} \cdot KLAFVV\left(\frac{pbr}{ps}\right) \qquad (3)$$

Der Luftmassenstrom mvv über die Ventile ist das Produkt eines Norm-Luftmassenstroms mvvn über die Ventile in Abhängigkeit von der Ventilstellung vv multipliziert mit einem Druckkorrekturfaktor, einem Temperaturkorrekturfaktor und einem Faktor einer Ventilausflußkennlinie KLAFVV. Der Norm-Luftmassenstrom mvvn über die Ventile entspricht dem Luftmassenstrom bei einem definierten Druck p0 und einer definierten Temperatur T0. Der Druckkorrekturfaktor ist das Verhältnis aus dem Saugrohrdruck ps nach der Drosselklappe DK und dem Druck p0. Der Temperaturkorrekturfaktor ist die Wurzel aus dem Verhältnis der Temperatur T0 und der Temperatur Ts im Saugrohr nach der Drosselklappe DK. Der Faktor KLAFVV entspricht dem vom Verhältnis aus dem Brennraumdruck pbr zum Saugrohrdruck ps abhängigen Wert der Ventilausflußkennlinie. Die Ventilausflußkennlinie kann in erster Näherung als ein Maß für die Strömungsgeschwindigkeit des strömenden Gases über das mindestens eine Einlaßventil gesehen werden.

Unter Venachlässigung des Saugrohrdrucks ps kann der Luftmassenstrom mvv über mindestens ein Ventil auch als Funktion des Ventilhubes und der Motordrehzahl abgeschätzt werden.

In der Gleichung 4 ist der Differenzdruck dps im Saugrohr dargestellt, der die Differenz zwischen dem Druck pvdk vor der Drosselklappe DK und dem Druck ps hinter der Drosselklappe angibt. Oder anders ausgedrückt, ist der Saugrohrdifferenzdruck dps gleich der Differenz zwischen dem Umgebungsdruck pu und dem Saugrohrdruck ps hinter der Drosselklappe DK.

$$dps = pvdk - ps = pu - ps \tag{4}$$

Wie das Funktionsdiagramm in Figur 2 zeigt, wird aus einem ersten Kennfeld KF1 in Abhängigkeit von der Drosselklappenstellung dk und dem Differenzdruck dps der Luftmassenstrom mdk zur Drosselklappe entnommen. Die Drosselklappenstellung dk wird üblicherweise mittels zweier Potentiometer erfaßt, so daß damit eine Plausibilitätsüberprüfung des Drosselklappensignals dk möglich ist. Der Differenzdruck dps entsteht durch Messung der beiden Drücke pvdk vor der Drosselklappe DK und ps nach der Drosselklappe DK. Der aus dem ersten Kennfeld KF1 herausgelesene Luftmassenstrom wird über ein Tiefpaßfilter FI geführt, um bestimmte dynamische Anteile aus dem Luftmassensignal, die bei Veränderung der Drosselklappenstellung zustande kommen, herauszufiltern. Desweiteren wird aus einem zweiten Kennfeld KF2 in Abhängigkeit vom Einlaßventilhub vv und der Motordrehzahl nmot der Luftmassenstrom mvv durch das mindestens eine Eingangsventil herausgelesen.

Die beiden Luftmassenströme mdk und mvv werden einer Minimalwertbildung MIN unterzogen und jeweils der kleinste der beiden Luftmassenströme mdk, mvv einem Dividierer DIV1 zugeführt. Der Dividierer DIV1 bildet aus dem jeweils kleineren der beiden Luftmassenströme mdk, mvv und der Motordrehzahl nmot, welche von einem Multiplizierer MU1 mit einer motorspezifischen Konstanten KUMSRL multipliziert wird. Diese motorspezifische Konstante KUMSRL ist im wesentlichen abhängig von der Zylinderzahl und dem Hubvolumen des Motors. Das Ausgangssignal des Dividierers DIV1 stellt dann eine Lastinformation 11 oder 12 dar. Je nachdem ob die Drosselklappe oder das mindestens eine Einlaßventil eine größere Drosselwirkung haben, steht am Ausgang des Dividierers DIV1 entweder eine erste von der Drosselklappenstellung DK abhängige Lastinformation 11 oder eine vom Einlaßventilhub VV abhängige zweite Lastinformation 12 zur Verfügung.

Die erste bzw. zweite Lastinformation 11 bzw. 12 wird über einen Schalter SW einem Schwellwertentscheider SE1 zugeführt, wenn der Schalter SW seine Schaltposition 1 eingenommen hat. Der Schalter SW befindet sich dann in der Schaltposition 1, wenn keine der beiden an den Eingängen eines ODER-Gatters OD anliegenden Bedingungen BVV und BDS erfüllt ist. Wenn die Bedingung BVV den Wert 1 hat, bedeutet das, daß das mindestens eine Einlaßventil auf maximalen Hub eingestellt ist, die variable Ventilsteuerung also nicht wirksam ist und sich daher der Motor im konventionellen Betrieb befindet. Hat die Bedingung BDS den Wert 1, so wird damit angezeigt, daß ein Drucksensorfehler vorliegt und deshalb der Differenzdruck dps fehlerbehaftet ist, eine Drosselung über die Ventile also nicht mehr möglich ist. Der Schalter SW befindet sich also in der Schaltstellung 1 und der Schwellwertentscheider SE1 erhält als ein Eingangssignal entweder die erste oder die zweite Lastinformation 11, 12, wenn beide Bedingungen BVV und BDS den Wert 0 haben, was bedeutet, daß sowohl die variable Ventilsteuerung fehlerfrei arbeitet als auch der bzw. die Drucksensoren einen fehlerfreien Differenzdruck dps messen.

Die Bedingungen BVV und BDS werden unabhängig von den Informationen vv und dps hergeleitet. Und zwar werden zur Generierung dieser Bedingungen BVV und BDS Informationen verwendet, z.B. Rückmeldung des Ventil-Steuergerätes, elektrische Plausibilisierung des Drucksignals, welche nicht auf eine fehlerfreie Funktion abgesichert werden müssen. Denn im Falle eines unberechtigten Setzens der Bedingung BVV oder BDS auf logisch 1 wird die Drosselung über die Ventile aufgehoben und es kann eine in der eingangs zitierten EP 0 778 406 A2 beschriebene konventionelle Fehlerüberwachung durchgeführt werden. Bei einem fehlerhafte Nichtsetzen der Bedingung BVV oder BDS auf logisch 0 wird das mit der hier angewendeten Plausibilitätsüberprüfung erkannt.

Hat nun eine der beiden Bedingungen BVV oder BDS aufgrund eines Fehlers den Wert 1, so wird vom Ausgangssignal des ODER-Gatters OD der Schalter SW in die Schaltposition 2 versetzt. In diesem Fall wird über den Schalter SW eine dritte Lastinformation 13 an den Schwellwertentscheider SE1 durchgeschaltet. Die dritte Lastinformation 13 wird aus einem dritten Kennfeld KF3 in Abhängigkeit von der Drosselklappenstellung dk und der Motordrehzahl nmot herausgelesen. Je nachdem welche der drei Lastinformationen 11, 12 oder 13 am Schwellwertentscheider SE1 anliegt, vergleicht dieser die betreffende Lastinformation 11, 12 oder 13 mit der vom Luftmassensensor HFM gemessenen Last lhfm. Unterschreitet die gemessene Last lhfm die Lastinformation 11 oder 12 oder 13 so signalisiert der Schwellwertentscheider SE1 einen Fehler fhfm der gemessenen Last. Der Schwellwertentscheider SE1 läßt allerdings eine gewisse Toleranz bei der Abweichung des gemessenen Lastsignals lhfm von der Lastinformation 11, 12 oder 13 zu bevor er ein Fehlersignal fhfm abgibt.

Um eine korrekte Plausibilitätsprüfung für die gemessene Last durchführen zu können, muß abgesichert werden, daß auch die Information über die Drosselklappenstellung dk, die Information über den Differenzdruck dps und die Information über den Ventilhub vv fehlerfrei sind.

Eine Plausibilitätsüberprüfung der Drosselklappenstellung dk erfolgt in bekannter Weise mittels zweier Potentiometer, welche die Drosselklappenstellung messen. Auf diese Plausibilitätsprüfung wird deshalb nicht näher eingegangen.

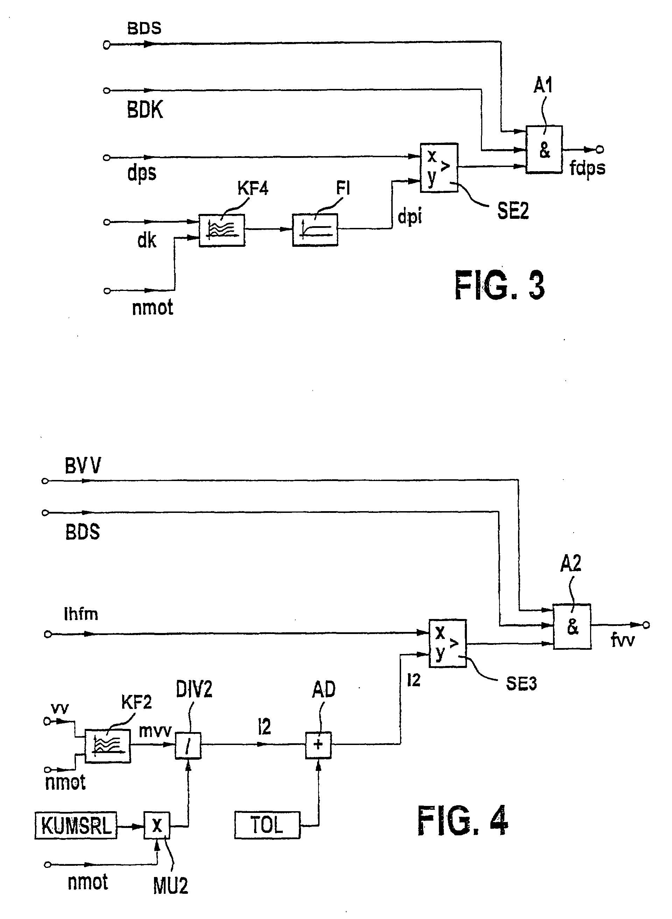

Eine Plausibilitätsprüfung für den Differenzdruck dps gibt das in der Figur 3 dargestellte Funktionsdiagramm wieder. Dabei wird von einem Schwellwertentscheider SE2 der gemessene Differenzdruck dps mit einem Differenzdruck dpi verglichen, der in Abhängigkeit von der Drosselklappenstellung dk und der Motordrehzahl nmot aus einem Kennfeld KF4 entnommen wird. Das dem Kennfeld KF4 nachgeschaltete Tiefpaßfilter Fi hat die gleiche Funktion wie das in der Figur 2 vorkommende Tiefpaßfilter Fi, nämlich unerwünschte Signalanteile zu unterdrücken, die durch Veränderungen der Drosselklappenstellung verursacht werden. Stellt der Schwellwertentscheider SE2 fest, daß der gemessen Differenzdruck dps größer ist als die Differenzdruckinformation dpi, so signalisiert er einen Fehler des gemessenen Differenzdrucks dps durch Abgabe einer logischen 1 an ein UND-Gatter A1. Am Ausgang dieses UND-Gatters A1 erscheint nur dann ein Fehlersignal fdps in Form einer logischen 1, wenn gleichzeitig auch zwei Bedingungen BDS und BDK erfüllt sind. Die Bedingung BDS hat den Wert 1, wenn der Differenzdrucksensor in Ordnung ist, und die Bedingung BDK hat den Wert 1, wenn die Sensorik für die Erfassung der Drosselklappenstellung fehlerfrei arbeitet. Denn nur, wenn diese beiden Bedingungen BDS und BDK erfüllt sind, macht die beschriebene Plausibilitätsprüfung für den Differenzdruck dps Sinn, und nur dann sollte das UND-Gatter A1 ein Fehlersignal fdps ausgeben, falls der gemessene Differenzdruck dps vom aus dem Kennfeld KF4 hergeleiteten Differenzdruck dpi um ein bestimmtes Maß abweicht.

Für die beiden Bedingungen BDS und BDK und deren Unabhängigkeit von den Informationen dps und dk gilt das Gleiche, wie bereits im Zusammnehang mit der Figur 2 zu den Bedingungen BVV und BDS ausgeführt. Für die Herleitung der Bedingungen BDS und BDK können elektrische Plausibilisierungssignale des Saugrohrdifferenzdrucks und der Drosselklappenstellung herangezogen werden.

Das in der Figur 4 dargestellte Funktionsdiagramm verdeutlicht die Plausibilitätsprüfung des Einlaßventilhubes vv. Dazu wird die zweite aus dem Einlaßventilhub vv und der Motordrehzahl nmot abgeleitete Lastinformation 12 mit der gemessenen Last lhfm von einem Schwellwertentscheider SE3 verglichen. Die aus dem Einlaßventilhub vv und der Motordrehzahl nmot hergeleitete Lastinformation 12 wird in gleicher Weise wie bereits im Funktionsdiagramm der Figur 2 beschrieben, dadurch gewonnen, daß in Abhängigkeit vom Einlaßventilhub vv und von der Motordrehzahl nmot aus dem Kennfeld KF2 der Luftmassenstrom mvv durch das mindestens eine Einlaßventil entnommen wird und dieser Luftmassenstrom mvv von dem Dividierer DIV2 durch die Motordrehzahl nmot dividiert wird, welche mittels des Multiplizierers MU2 mit einer motorspezifischen Konstante (abhängig von Zylinderzahl, Hubvolumen) beaufschlagt wird. Am Ausgang des Dividierers DIV2 steht die Lastinformation 12 zur Verfügung. Bevor die Lastinformation 12 am Ausgang des Dividierers DIV2 dem Schwellwertentscheider SE3 zugeführt wird, wird sie mittels eines Addierers AD noch um einen Toleranzbetrag TOL erhöht. Der Schwellwertentscheider SE3 gibt an seinem Ausgang eine logische 1 ab, wenn das gemessene Lastsignal lhfm größer ist als die aus dem Einlaßventilhub vv und der Motordrehzahl nmot abgeleitete Lastinformation 12. In diesem Fall muß nämlich der Einlaßventilhub fehlerhaft sein. Anstelle der gemessenen Last lhfm kann auch eine aus der Drosselklappenstellung und dem Saugrohrdifferenzdruck abgeleitete Last mit der Lastinformation 12 verglichen werden.

Ein UND-Gatter A2 gibt eine einen Fehler signalisierende logische 1 des Schwellwertentscheiders SE3 nur dann als Fehlersignal fvv an seinem Ausgang ab, wenn gleichzeitig die zwei Bedingungen BVV und BDS mit einer logischen 1 an den Eingängen des UND-Gatters A2 erscheinen. Die Bedingung BVV besagt, daß, wenn sie den logischen Zustand 1 hat, die Ventilhubinformation in Ordnung ist. Die Bedingung BDS besagt, daß, wenn sie sich im logischen Zustand 1 befindet, der Differenzdrucksensor fehlerfrei arbeitet.

**Patentansprüche**

1. Verfahren zur Plausibilitätsprüfung einer gemessenen Last bei einer Brennkraftmaschine mit variabler Ventilhubsteuerung, **dadurch gekennzeichnet,**

   - **daß** in Abhängigkeit von der Drosselklappenstellung (dk) und einem aus dem Druck (pvdk) vor der Drosselklappe (DK) und dem Druck (ps) nach der Drosselklappe (DK) im Saugrohr ermittelten Differenzdruck (dps) eine erste Lastinformation (11) hergeleitet wird,
   - **daß** in Abhängigkeit vom Einlaßventilhub (vv) und von der Motordrehzahl (nmot) eine zweite Lastinformation (12) hergeleitet wird,
   - **daß** die kleinere der beiden Lastinformationen (11, 12) mit der gemessenen Last (lhfm) verglichen wird,
   - und **daß** ein Fehler (fhfm) der gemessenen Last (lhfm) signalisiert wird, wenn diese gegenüber der Kleineren der Lastinformationen (11, 12) abweicht.

**2.** Verfahren nach Anspruch 1, **dadurch gekennzeichnet, daß** in Abhängigkeit von der Drosselklappenstellung (dk) und der Motordrehzahl (nmot) eine dritte Lastinformation (13) hergeleitet wird und daß nur dann zur Plausibilitätsprüfung der gemessenen Last (lhfm) ein Vergleich mit der dritten Lastinformation (13) durchgeführt wird, wenn der ermittelte Differenzdruck (dps) oder der Einlaßventilhub (vv) fehlerhaft ist.

**3.** Verfahren nach einem der Ansprüche 1 oder 2, **dadurch gekennzeichnet, daß** eine Plausibilitätsprüfung des ermittelten Differenzdrucks (dps) durchgeführt wird, indem in Abhängigkeit von der Drosselklappenstellung (dk) und der Motordrehzahl (nmot) eine Differenzdruckinformation (dpi) abgeleitet wird, die mit dem ermittelten Differenzdruck (dps) verglichen wird, und daß ein Fehler (fdps) des Differenzdrucks (dps) signalisiert wird, wenn dieser geringer ist als die Differenzdruckinformation (dpi).

**4.** Verfahren nach einem der Ansprüche 1 oder 2, **dadurch gekennzeichnet, daß** eine Plausibilitätsprüfung des Einlaßventilhubes (vv) durchgeführt wird, indem die zweite aus dem Einlaßventilhub (vv) und der Motordrehzahl (nmot) abgeleitete Lastinformation (12) mit der gemessenen Last (lhfm) oder einer aus der Drosselklappenstellung und dem Saugrohrdifferenzdruck abgeleitete Last verglichen wird, und daß ein Fehler (fvv) des Einlaßventilhubes (vv) signalisiert wird, wenn die zweite Lastinformation (12) kleiner ist als die gemessene oder eine aus der Drosselklappenstellung und dem Saugrohrdifferenzdruck abgeleitete Last (lhfm).

**5.** Verfahren nach Anspruch 1, **dadurch gekennzeichnet, daß** die erste Lastinformation (11) dadurch gewonnen wird, daß in Abhängigkeit von der Drosselklappenstellung (dk) und dem Differenzdruck (dps) aus einem Kennfeld (KF1) der Luftmassenstrom (mdk) zur Drosselklappe (dk) herausgelesen wird und daß dieser Luftmassenstrom (mdk) durch die Motordrehzahl (nmot), welche mit einem von der Zylinderzahl und dem Hubraum abhängigen motorspezifischen Konstante (KUMSRL) multipliziert wird, dividiert wird.

**6.** Verfahren nach einem der Ansprüche 1 oder 4, **dadurch gekennzeichnet, daß** die zweite Lastinformation (12) dadurch gewonnen wird, daß in Abhängigkeit vom Einlaßventilhub (vv) und der Motordrehzahl (nmot) aus einem Kennfeld (KF2) der Luftmassenstrom (mvv) durch das (die) Einlaßventil(e) herausgelesen wird, und daß dieser Luftmassenstrom (mvv) durch die Motordrehzahl (nmot), welche mit einem von der Zylinderzahl und dem Hubvolumen abhängigen motorspezifischen Konstante (KUMSRL) multipliziert wird, dividiert wird.

## Claims

**1.** Method for plausibility checking of a measured load on an internal combustion engine with variable valve travel control **characterized**

- **in that** first load information (11) is derived as a function of the throttle valve position (dk) and a pressure difference (dps) which is determined from the pressure (pvdk) upstream of the throttle valve (DK) and the pressure (ps) downstream from the throttle valve (DK) in the induction manifold,
- **in that** second load information (12) is derived as a function of the inlet valve travel (vv) and of the engine rotation speed (nmot),
- **in that** the smaller of the two load information items (11, 12) is compared with the measured load (lhfm), and
- **in that** an error (fhfm) in the measured load (lhfm) is signalled if this differs from the smaller of the load information items (11, 12).

**2.** Method according to Claim 1, **characterized in that** third load information (13) is derived as a function of the throttle valve position (dk) and of the engine rotation speed (nmot) and **in that** a comparison with the third load information (13) for plausibility checking of the measured load (lhfm) is carried out only if the determined pressure difference (dps) or the inlet valve travel (vv) is incorrect.

**3.** Method according to one of Claims 1 or 2, **characterized in that** a plausibility check of the determined pressure difference (dps) is carried out by deriving pressure difference information (dpi) as a function of the throttle valve position (dk) and of the engine rotation speed (nmot), which pressure difference information (dpi) is compared with the determined pressure difference (dps), and **in that** an error (fdps) in the pressure difference (dps) is signalled if this is less than the pressure difference information (dpi).

**4.** Method according to one of Claims.1 or 2, **characterized in that** a plausibility check of the inlet valve travel (vv) is carried out by comparing the second load information (12) which is derived from the inlet valve travel (vv) and from the engine rotation speed (nmot), with the measured load (lhfm) or with a load which is derived from the throttle valve position and the induction manifold pressure difference, and **in that** an error (fvv) in the inlet valve travel (vv) is signalled if the second load information (12) is less than the measured load (lhfm), or is less than the load (lhfm) which is derived from the throttle valve position and from the induction manifold pressure difference.

5. Method according to Claim 1, **characterized in that** the first load information (11) is obtained by reading the air mass flow (mdk) to the throttle valve (dk) from a family of characteristics (KF1) as a function of the throttle valve position (dk) and of the pressure difference (dps), and **in that** this air mass flow (mdk) is divided by the engine rotation speed (nmot), which is multiplied by an engine-specific constant (KUMSRL) which is dependent on the number of cylinders and on the swept volume.

6. Method according to one of Claims 1 or 4, **characterized in that** the second load information (12) is obtained by reading the air mass flow (mvv) through the inlet valve or valves from a family of characteristics (KF2) as a function of the inlet valve travel (vv) and of the engine rotation speed (nmot), and **in that** this air mass flow (mvv) is divided by the engine rotation speed (nmot), which is multiplied by an engine-specific constant (KUMSRL) which is dependent on the number of cylinders and on the swept volume.

**Revendications**

1. Procédé pour vérifier la plausibilité d'une charge mesurée dans un moteur à combustion interne à commande variable de levée de soupape,
   **caractérisé en ce que**

   - suivant la position du volet d'étranglement (dk) et d'une différence de pression (dps) obtenue à partir de la pression (pvdk) en amont du volet d'étranglement (DK) et de la pression (ps) en aval du volet d'étranglement (DK) dans la conduite d'aspiration, on déduit une première information de charge (11),
   - en fonction de la levée de soupape d'admission (vv) et du régime moteur (nmot) on déduit une seconde information de charge (12),
   - on compare la plus petite des deux informations de charge (11, 12) à la charge mesurée (lhfm),
   - et on signale un défaut (fhfm) de la charge mesurée (lhfm) si celle-ci diffère de la plus petite des informations de charge (11, 12).

2. Procédé selon la revendication 1,
   **caractérisé en ce qu'**
   en fonction de la position du volet d'étranglement (dk) et du régime moteur (nmot) on déduit une troisième information de charge (13) et,
   pour vérifier seulement alors la plausibilité de la charge mesurée (lhfm) on effectue une comparaison avec la troisième information de charge (13) si la différence de pression (dps) obtenue ou si la levée de soupape d'admission (vv) sont entachées d'erreurs.

3. Procédé selon l'une des revendications 1 ou 2,
   **caractérisé en ce qu'**
   on effectue une vérification de plausibilité de la différence de pression obtenue (dps) **en ce qu'**en fonction de la position du volet d'étranglement (dk) et du régime moteur (nmot) on déduit une information relative à la différence de pression (dpi) qui est comparée à la différence de pression obtenue (dps), et
   on signale un défaut (fdps) de la différence de pression (dps) si celle-ci est inférieure à l'information de différence de pression (dpi).

4. Procédé selon l'une des revendications 1 ou 2,
   **caractérisé en ce qu'**
   on effectue une vérification de plausibilité de la levée des soupapes d'admission (vv) **en ce que** l'on compare la seconde information de charge (12) déduite de la levée de soupape d'admission (vv) et du régime moteur (nmot) avec la charge mesurée (lhfm) ou une charge déduite de la position du volet d'étranglement et de la différence de pression dans la conduite d'aspiration, et
   on signale une erreur (fvv) de la levée de la soupape d'admission (vv) si la seconde information (12) est inférieure à la charge (lhfm) mesurée ou déduite de la position du volet d'étranglement et de la différence de pression dans la conduite d'aspiration.

**5.** Procédé selon la revendication 1,
**caractérisé en ce qu'**
on obtient la première information de charge (11), on extrait cette information en fonction de la position du volet d'étranglement (dk) et de la différence de pression (dps) d'un champ de caractéristiques (KF1) du flux massique d'air (mdk) par rapport au volet d'étranglement (dk) et
on divise ce flux massique d'air (mdk) par le régime moteur (nmot), multiplié par une constante (KUMSRL) spécifique au moteur et dépendante du nombre de cylindres et de la cylindrée.

**6.** Procédé selon l'une des revendications 1 ou 4,
**caractérisé en ce qu'**
on obtient la seconde information de charge (12) **en ce qu'**en fonction de la levée de la soupape d'admission (vv) et du régime moteur (nmot), à partir d'un champ de caractéristique (KF2) on extrait le débit massique d'air (mvv) à travers la ou les soupapes d'admission et on divise ce débit massique d'air (vv) par le régime moteur (nmot) multiplié par une constante spécifique au moteur, dépendante de la cylindrée (KUMSRL) et du nombre de cylindres

FIG. 1

FIG. 2

EP 1 144 831 B1

FIG. 3

FIG. 4